# EUROPÄISCHE PATENTSCHRIFT

(11) **EP 1 803 028 B1**
(45) Veröffentlichungstag und Bekanntmachung des Hinweises auf die Patenterteilung: **21.03.2012**
(21) Anmeldenummer: 05778102.3
(22) Anmeldetag: 09.09.2005
(51) Int. Cl.: G02C 5/22

(54) **FEDERSCHARNIER EINER BRILLE**
SPRING HINGE FOR A PAIR OF SPECTACLES
CHARNIERE A RESSORT DE LUNETTES

(30) Priorität: 17.09.2004 DE 102004045202; 30.05.2005 DE 102005024664
(43) Veröffentlichungstag der Anmeldung: 04.07.2007
(73) Patentinhaber: OBE Ohnmacht & Baumgärtner GmbH & Co. KG, 75228 Ispringen (DE)
(72) Erfinder: WIENICKE, Frank, 75217 Birkenfeld (DE); BOHNERT, Andreas, 76135 Karlsruhe (DE); WANNENMACHER, Ulrich, 76689 Karlsdorf (DE)
(74) Vertreter: Gleiss, Alf-Olav
(86) Internationale Anmeldenummer: PCT/EP2005/009732
(87) Internationale Veröffentlichungsnummer: WO 2006/029776

(56) Entgegenhaltungen:
- WO-A-03/065108
- WO-A-03/071338
- DE-A1- 19 515 495
- US-A1- 2002 092 960

## Beschreibung

Die Erfindung betrifft ein Federscharnier einer Brille gemäß Oberbegriff des Anspruchs 1.

Federscharniere der hier angesprochenen Art sind beispielsweise aus der DE 195 15 495 A1 bekannt. Sie weisen ein Gehäuse auf, das als separates Bauteil ausgebildet sein kann oder aber durch ein Bauteil der Brille, beispielsweise durch den Bügel, gebildet wird. Außerdem umfassen Federscharniere der hier angesprochenen Art ein Scharnierteil, an dem ein weiteres Teil der Brille eingreift. Ist das Federscharnier am Bügel vorgesehen, greift hier das Mittelteil der Brille ein, wird das Federscharnier mit dem Mittelteil kombiniert, greift am Scharnierteil der Bügel ein. Außerdem umfasst ein Federscharnier der hier angesprochenen Art eine Feder, die dazu dient, die Bügel der Brille an den Kopf eines Benutzers anzulegen und damit den Tragekomfort zu verbessern. Schließlich ist bei einem Federscharnier ein Führungsteil vorgesehen, das dazu dient, das Scharnierteil im Gehäuse zu führen. Hierzu weist das Führungsteil eine Führungseinrichtung auf, die sich einerseits an der Innenseite des Gehäuses und andererseits am Scharnierteil abstützt. Die Führungseinrichtung weist außerdem mindestens ein Führungselement auf, das einen der Gehäuseinnenseite zugewandten Außenführungsbereich umfasst, wobei das Führungselement zwischen beiden Seitenwänden des Scharnierteils und einer Innenseite des Gehäuses und/oder zwischen Unter- und/oder Oberseite des Scharnierteils und einer Innenseite des Gehäuses angeordnet ist. Es hat sich herausgestellt, dass die Maßtoleranzen der Bauteile eines Federscharniers dazu führen, dass das Scharnierteil innerhalb des Gehäuses nicht optimal geführt ist und sich ein Verdrehspiel einstellt. Dieses wird durch Verformung des Führungsteils beim Anpassen der Brille an den Kopf eines Benutzers oft noch vergrößert. Das Verdrehspiel führt dazu, dass die Brille nicht optimal am Kopf eines Benutzers gehalten wird.

Aufgabe der Erfindung ist es daher, ein Federscharnier der hier angesprochenen Art so zu verbessern, dass ein Verdrehspiel auf ein Minimum reduziert wird, ohne dass sich die Funktion des Federscharniers, beispielsweise durch erhöhte innere Reibung, verschlechtert.

Zur Lösung dieser Aufgabe wird ein Federscharnier vorgeschlagen, das die in Anspruch 1 genannten Merkmale aufweist. Das Federscharnier zeichnet sich durch einen federnden Außenführungsbereich aus. Dieser liegt an der Gehäuseinnenwand an, berührt aber das Scharnierteil nicht. Ihm sind zwei in einem Abstand zueinander angeordnete Stützbereiche zugeordnet, von denen mindestens einer der Führung des Scharnierteils im Gehäuse dient. Die Federeigenschaften des Außenführungsbereichs gleichen Toleranzunterschiede aus und fangen Kräfte ab, die beim Einstellen der Brille in das Federscharnier eingeleitet werden. Auf diese Weise wird eine Verformung des Gehäuses bei Einstellarbeiten vermieden und ein Verdrehspiel praktisch ganz ausgeschlossen. Es ist also zwischen dem Scharnierteil und dem Gehäuse jeweils mindestens ein Führungselement vorgesehen, das einerseits mit seinem Außenführungsbereich an einer Innenseite des Gehäuses anliegt und anderseits mit mindestens einem Stützbereich das Scharnierteil führt.

Ein besonders bevorzugtes Ausführungsbeispiel des Federscharniers zeichnet sich dadurch aus, dass das Führungsteil im Wesentlichen U-förmig ausgebildet ist und dass die Schenkel des Führungsteils durch zwei Führungselemente gebildet werden, die auf zwei gegenüberliegenden Seiten des Scharnierteils angeordnet sind und dieses zwischen sich aufnehmen. Auf diese Weise sind federnde Außenführungsbereiche unten und oben oder beidseits des Scharnierteils vorgesehen, so dass ein besonders guter Toleranzausgleich gegeben ist und in das Federscharnier eingeleitete Kräfte optimal abgefangen und Verformungen des Gehäuses praktisch ganz vermieden werden.

Weitere Ausgestaltungen ergeben sich aus den Unteransprüchen.

Die Erfindung wird im Folgenden anhand der Zeichnung näher erläutert. Es zeigen:
- Figur 1: einen schematischen Querschnitt durch ein erstes Ausführungsbeispiel eines Federscharniers;
- Figur 2: eine perspektivische Ansicht eines Führungsteils des in Figur 1 dargestellten Federscharniers;
- Figur 3: eine Seitenansicht des Führungsteils gemäß Figur 2;
- Figur 4: eine Draufsicht auf das Führungsteil gemäß Figur 2;
- Figur 5: einen schematischen Querschnitt durch ein zweites Ausführungsbeispiel eines Federscharniers;
- Figur 6: einen schematischen Querschnitt durch ein drittes Ausführungsbeispiel eines Federscharniers;
- Figur 7: eine perspektivische Ansicht eines Führungsteils des in Figur 6 dargestellten Federscharniers,
- Figur 8: eine Draufsicht auf ein ebenes Element zur Herstellung eines Führungsteils und
- Figur 9: eine Explosionsdarstellung eines abgewandelten Ausführungsbeispiels eines Federscharniers in Unteransicht.

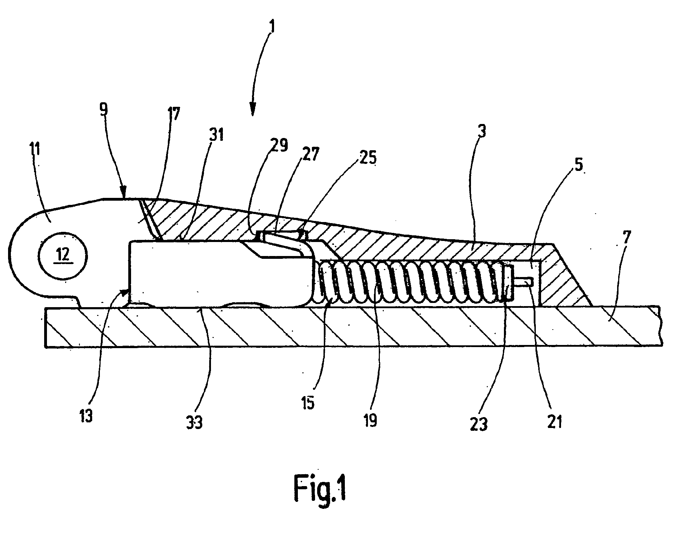

Das in Figur 1 dargestellte erste Ausführungsbeispiel eines Federscharniers 1 weist ein Gehäuse 3 auf, das eine Ausnehmung 5 umschließt und auf einen Teil einer Brille, hier auf einen Bügel 7 aufgebracht ist. Denkbar ist es auch, den Bügel so dick auszubilden, dass das Gehäuse einen Teil des Bügels bildet. Überdies kann das Gehäuse auch Teil eines Mittelteils einer Brille sein, das die Gläser trägt, oder auf dieses aufgebracht sein.

Das Gehäuse 3 nimmt einen Bereich eines Scharnierteils 9 auf. Der aus dem Gehäuse 3 ragende Bereich weist ein Scharnierauge 11 mit einem Durchbruch 12 auf, der von einem Befestigungsmittel, beispielsweise von einer Schraube durchgriffen wird, um ein Gegenstück des Federscharniers 1 am Scharnierteil 9 zu befestigen.

Das Federscharnier 1 umfasst außerdem ein Führungsteil 13, das zumindest teilweise von dem Gehäuse 3 aufgenommen wird. In der Ausnehmung 5 ist außerdem eine Feder 15 untergebracht, die bei Benutzung des Federscharniers 1 komprimiert werden kann. Der Grundaufbau eines Federscharniers 1 ist bekannt, so dass auf die Darstellung von Einzelheiten verzichtet wird. Bei dem hier dargestellten Ausführungsbeispiel weist das Scharnierteil 9 einen Grundkörper 17 auf, von dem ein Fortsatz 19 ausgeht, der sich praktisch ganz durch den hinteren Bereich der Ausnehmung 5 erstreckt. Hier ist die Feder 15 als Schraubenfeder ausgebildet, die den Fortsatz 19 umgibt und sich einerseits - hier über das Führungsteil 13 - am Grundkörper 17 abstützt und andererseits an einem Widerlager 21 am Endes des Fortsatzes 19, das beispielsweise durch Verformung desselben realisiert wird. Zwischen Widerlager und Feder kann noch ein Zwischenring 23 vorgesehen sein.

Wird eine Zugkraft auf das Scharnierteil 9 ausgeübt, die in Figur 1 nach links wirkt, so verbleibt das Führungsteil 13 in der hier dargestellten Position, während das Scharnierteil 9 mit dem Widerlager 21 und dem Fortsatz 19 nach links verlagert wird. Dies führt zu einer Kompression der Feder 15 und damit zu einer Rückstellkraft, die das Scharnierteil 9 in die hier dargestellte Position nach rechts zurückverlagert.

Nach dem Aufbringen der Feder 15 auf den Fortsatz 19 wird diese vorgespannt, sodass sich eine gut handhabbare Montageeinheit aus Scharnierteil 9, Führungsteil 13 und Feder 15 ergibt, wobei auch ein Zwischenring 23 vorgesehen werden kann.

Das Führungsteil 13 ist hier gleichzeitig Verschlussteil des Federscharniers 1 und hält das Scharnierteil 9 im Gehäuse 3. Die Verankerung des Führungsteils 13 im Gehäuse 3 kann auf beliebige Weise erfolgen, durch Schrauben, Sicken oder dergleichen. Das hier dargestellte Führungsteil 13 weist ein Verriegelungselement 25 auf, das eine federnde Verriegelungsnase 27 umfasst. Diese wird durch ihre Federeigenschaften nach oben gedrängt und schnappt beim Einschieben des Führungsteils 13 hinter eine auf der Innenfläche der Ausnehmung 5 vorgesehene Verriegelungsschulter 29, die ein Herausziehen des Führungsteils 13 aus der Ausnehmung 5 verhindert.

Das Gehäuse 3 ist so ausgebildet, dass es im vorderen, in Figur 1 linken, Teil eine obere Führungsfläche 31 aufweist, an der das Führungsteil 13 und vorzugsweise auch das Scharnierteil 9 anliegen. Das Gehäuse 3 weist andererseits eine untere Führungsfläche 33 auf, die hier von der Oberseite des Bügels 7 gebildet wird und an der das Führungsteil 13 und vorzugsweise das Scharnierteil 9 anliegen. Ist das Gehäuse 3 Teil des Bügels 7 oder eines Mittelteils, wird die untere Führungsfläche 33 von einer Innenseite des Gehäuses 3 gebildet. Das Führungsteil 13 und vorzugsweise das Scharnierteil 9 erstrecken sich hier also über die Höhe der Ausnehmung 5 im Gehäuse 3.

Der rechte Bereich der Ausnehmung 5 ist nicht so hoch ausgebildet wie der zwischen den beiden Führungsflächen 31, 33 liegende linke Bereich der Ausnehmung 5, da er lediglich dazu dient, den Fortsatz 19 mit der Feder 15 und dem Zwischenring 23 mit dem Widerlager 21 aufzunehmen.

Das Gehäuse 3 ist auf bekannte Weise am Bügel 7 befestigt, beispielsweise durch Verkleben, Löten oder vorzugsweise Elektroschweißen. Es ist möglich, das Scharnierteil 9 mit dem Führungsteil 13, der Feder 15 und dem Widerlager 21 als Montageeinheit vorzubilden und in das Gehäuse 3 einzuschieben, wobei die Verriegelungsnase 27 durch die obere Führungsfläche 31 zunächst nach unten gedrückt wird, bis sie sich in der in Figur 1 wiedergegebenen Position befindet, nach oben federn kann und damit durch die Verriegelungsschulter 29 gegen ein Herausziehen aus dem Gehäuse 3 gesichert ist.

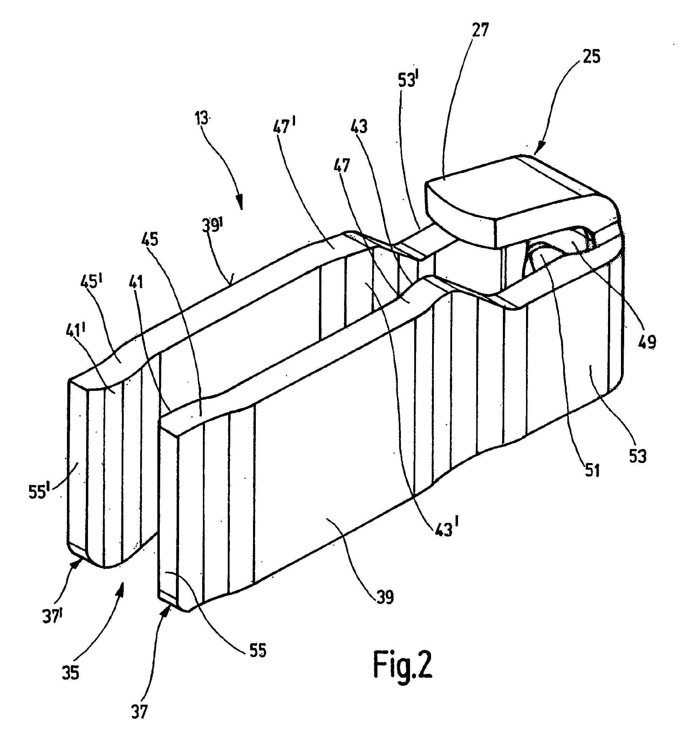

Figur 2 zeigt deutlich vergrößert ein Führungsteil 13 in perspektivischer Ansicht. Dieses weist eine Führungseinrichtung 35 auf, die zumindest ein Führungselement 37 umfasst. Dieses ist mit einem Außenführungsbereich 39 versehen, der der Gehäuseinnenseite zugewandt ist und in eingebautem Zustand an der Innenseite der Ausnehmung 5 des Gehäuses 3 anliegt. An den Außenführungsbereich 39 grenzen zwei entgegengesetzt orientierte Stützbereiche an, von denen ein erster Stützbereich 41 hier am freien Ende des Führungselements 37 vorgesehen und ein zweiter Stützbereich 43 in einem Abstand dazu angeordnet ist. Die Stützbereiche 41, 43 liegen an dem Scharnierteil 9 an und führen dieses.

Aus der Prinzipskizze wird deutlich, dass bei dieser Ausführungsform des Außenführungsbereichs 39 dessen Außenfläche in einer Ebene liegt, die in einem Abstand zu einer Ebene angeordnet ist, in der die beiden Stützbereiche 41 und 43 liegen. Der Außenbereich des Führungselements 37 kann aber auch gewölbt ausgebildet sein. Jedenfalls ist zwischen den Stützbereichen 41 und 43 ein außen liegender Bereich ausgebildet, in dem das Führungselement 37 an einem allerdings hier nicht dargestellten Scharnierteil 9 nicht anliegen würde. An den ersten Stützbereich 41 schließt sich also ein nach außen gewölbter erster Bogenbereich 45 an, entsprechend schließt sich an den zweiten Stützbereich 43 ein nach außen gewölbter zweiter Bogenbereich 47 an. Der zwischen dem ersten und zweiten Bogenbereich 45, 47 liegende Abschnitt ist im Wesentlichen eben oder nach außen gewölbt und bildet den Außenführungsbereich 39.

Das Führungselement 37 weist hier also nach allem einen im Wesentlichen ebenen Außenführungsbereich 39 auf, der über zwei Bogenbereiche 45 und 47 in Stützbereiche 41 und 43 übergeht, die im zusammengebauten Zustand des Federscharniers an einer Seitenfläche eines Scharnierteils 9 anliegen. Das Führungselement 37 ist dabei so ausgelegt, dass der Außenführungsbereich 39 federnd an der Innenseite eines Gehäuses 3 anliegt, so dass Toleranzunterschiede bei der Fertigung des Gehäuses, des Scharnierteils und des Führungsteils 13 ohne weiteres ausgleichbar sind. Das Führungsteil 13 bewirkt also eine sehr gute Führung des Scharnierteils 9 bei einer Axialbewegung innerhalb des Gehäuses 3, also wenn auf das Scharnierteil 9 Zugkräfte ausgeübt werden und dieses etwas aus dem Gehäuse 3 gegen die Kraft der Feder 15 herausgezogen und von der Feder 15 zurückgezogen wird.

Werden auf das Scharnierteil 9 im zusammengebauten Zustand des Federscharniers 1 Torsionskräfte ausgeübt, beispielsweise beim Anpassen der Bügel an den Kopf eines Benutzers, so werden auch diese optimal von dem Führungsteil 13 federnd abgefangen, so dass Verformungen des Gehäuses 3 sicher vermieden werden. Dies führt insgesamt zu einer Vermeidung, wenigstens zu einer sehr starken Reduzierung von einem Verdrehspiel des Scharnierteils 9 innerhalb des Gehäuses 3 eines Federscharniers 1. Beim Anpassen der Bügel einer Brille an den Kopf eines Benutzers können diese gegenüber dem mit den Gläsern versehenen Mittelteil auch durch Querkräfte nach oben oder unten gebogen werden (Inklination). Auch in diesem Fall werden die dabei auftretenden Kräfte von dem Führungsteil federnd abgefangen, so dass Verformungen des Gehäuses sicher vermieden werden.

Es ist denkbar, dass auf der dem Führungselement 37 gegenüberliegenden Seite keine weiteren Führungselemente vorgesehen sind und das Scharnierteil 9 auf der Innenseite der Ausnehmung 5, also an einer Innenseite des Gehäuses 3, entlang gleitet. Vorzugsweise ist aber vorgesehen, wie in Figur 2 auch dargestellt, dass das Führungsteil 3 zwei spiegelbildlich zu einer gedachten Mittelebene angeordnete Führungselemente 37 und 37' aufweist. Zwischen diesen liegt dann im zusammengebauten Zustand des Federscharniers 1 das Scharnierteil 9 und wird damit besonders gut geführt, weil auf beiden Seiten Führungselemente 37, 37' vorgesehen sind, die federnd ausgelegte Außenführungsbereiche 39, 39' aufweisen. Der Außenführungsbereich 39' geht aufgrund der symmetrischen Ausbildung über zwei Bogenbereiche 45', 47' in Stützbereiche 41' und 43' über.

Die Höhe der Führungselemente 37, 37' ist so ausgelegt, dass diese sich einerseits an einer oberen und unteren Führungsfläche 31, 33 in der Ausnehmung 5 im Gehäuse 3 abstützen können, andererseits sich praktisch über die gesamte Höhe des in das Gehäuse 3 ragenden Scharnierteils 9 erstrecken und dieses optimal führen. Werden also axiale Kräfte und insbesondere Torsionskräfte in das Scharnierteil 9 eingeleitet, verteilen sich diese auf eine große Fläche, so dass Verformungen des Scharnierteils 9 und des Gehäuses 13 mit hoher Sicherheit vermieden werden.

Das in Figur 2 dargestellte Ausführungsbeispiel des Führungsteils 13 zeichnet sich dadurch aus, dass es im Wesentlichen U-förmig ausgebildet ist, wobei die Schenkel des U durch die Führungselemente 37, 37' gebildet werden und diese über einen Verbindungsbereich 49, der Basis des U, miteinander verbunden werden. Hier ist vorgesehen, dass die Höhe der Führungselemente 37, 37' sich ausgehend von den zweiten Stützbereichen 43, 43' reduziert.

Der Verbindungsbereich 49 ist mit einer Ausnehmung 51 versehen, durch die der Fortsatz 19 ragt und dessen Innenfläche als Führung für den Fortsatz 19 dienen kann. Da die Führungselemente 37, 37' im vorderen Bereich des Federscharniers 1 zwischen der oberen Führungsfläche 31 und der unteren Führungsfläche 33 liegen und durch diese Flächen gehalten werden, wirken diese Haltekräfte bis zu dem Verbindungsbereich 49. Dieser kann im Innenraum des Gehäuses 3 nicht nach oben oder unten ausweichen. Daher kann die Ausnehmung 51 im Verbindungsbereich 49 den Fortsatz 19 des Scharnierteils 9 so abstützen, dass der Fortsatz 19 nicht nach oben oder unten ausweichen kann. Da andererseits die Führungselemente 37, 37' sich einerseits an der Gehäuseinnenfläche und andererseits an den Seitenflächen des Scharnierteils 9 abstützen, also quasi federnd zwischen der Gehäuseinnenseite und dem Scharnierteil 9 eingespannt sind, kann der Verbindungsbereich 49 auch nicht nach rechts oder links ausweichen, sodass die Ausnehmung 51 den Fortsatz 19 auch rechts und links abstützt. Das Scharnierteil 9 wird also durch den Verbindungsbereich 49 in allen Richtungen sicher abgestützt. Das Scharnierteil 9 wird also durch das Führungsteil 13 bei Kippbewegungen sicher abgestützt und geführt. Darüber hinaus, wie oben gesagt, bei Einwirkung axialer Kräfte sowie bei Einleitung von Torsionsmomenten.

Aus Figur 2 wird deutlich, dass zwischen den zweiten Stützbereichen 43, 43' und dem Verbindungsbereich 49 nochmals eine Außenführung realisiert werden kann. Damit stellt dann der oben beschriebene Außenführungsbereich 39, 39' den Hauptführungsbereich und ein zwischen den zweiten Stützbereichen 43, 43' und dem Verbindungsbereich 49 liegende Bereich der Führungselemente 37, 37' einen Zusatzbereich 53, 53' dar, in dem das Führungsteil 13 ebenfalls eine Außenführung realisieren kann.

Aus den Erläuterungen zu Figur 2 wird außerdem deutlich, dass die zwischen den freien Enden 55, 55' der Führungselemente 37, 37' und dem Verbindungsbereich 49 liegenden Außenführungsbereiche 39, 39' auch dadurch realisiert werden können, dass sich die Führungselemente 37, 37' einerseits nur nahe der freien Enden 55, 55' in den ersten Stützbereichen 41, 41' und andererseits an dem Verbindungsbereich 49 abstützen. Es kann also auf die zweiten Stützbereiche 43, 43' gegebenenfalls auch verzichtet werden.

Besonders bewährt hat sich aber das in Figur 2 dargestellte Ausführungsbeispiel eines Führungsteils 13, das -außer den Zusatzbereichen 53, 53'- im vorderen Bereich nahe der freien Enden 55, 55' einen über einen großen Teil -hier cirka 30 % bis 40 %- der Längserstreckung der Führungselemente 37, 37' verlaufenden Außenführungsbereich 39, 39' aufweist, sodass eine optimale federnde Abstützung des Scharnierteils 1 über das Führungsteil 13 im Gehäuse 3 gewährleistet ist. Dabei stützen sich die Stützbereiche 41, 41', 43, 43' sowie die Innenfläche der Ausnehmung 51 im Verbindungsteil 49 an dem Scharnierteil 9 ab und dienen für dieses als Innenführungsflächen.

Bei dem in Figur 2 dargestellten Ausführungsbeispiel ist vorgesehen, dass zur Verankerung des Führungsteils 13 ein Verriegelungselement 25 vorgesehen ist, das eine elastisch federnde Verriegelungsnase umfasst, durch die das Führungsteil 13 sicher in einem Gehäuse 3 gehalten werden kann. Aufgrund der federelastischen Eigenschaften der Verriegelungsnase 27 kann das Führungsteil 13 also mit einer Schnappverriegelung versehen werden, was die Montage in einem Gehäuse 3 wesentlich vereinfacht. Hier wird deutlich, dass die Verriegelungsfunktion unabhängig von der Führungsfunktion realisiert wird.

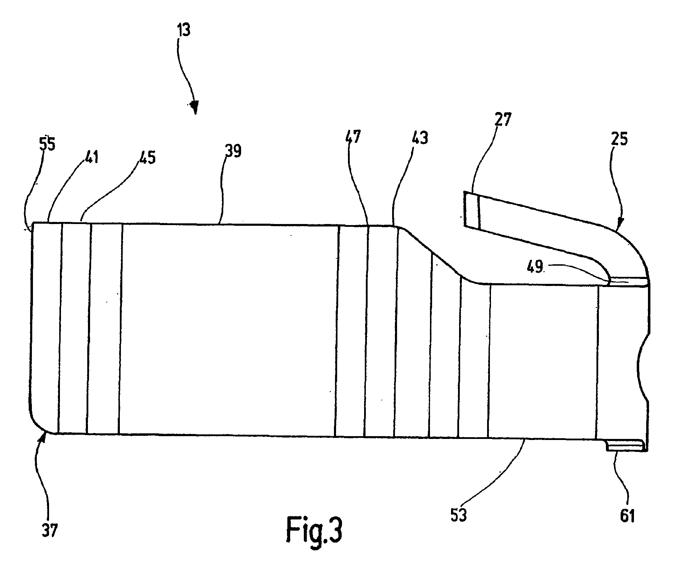

Figur 3 zeigt das in Figur 2 wiedergegebene Führungsteil 13 in Seitenansicht, also eine Ansicht, die im Wesentlichen der in Figur 1 wiedergegebenen entspricht. Gleiche Teile sind mit gleichen Bezugsziffern versehen, so dass insofern auf die Beschreibung der vorangegangenen Figuren verwiesen wird.

Die Seitenansicht gemäß Figur 3 zeigt das Führungselement 37, dessen freies Ende 55 in einem Abstand zum Verbindungsbereich 49 angeordnet ist. Nahe dem freien Ende 55 befindet sich der erste Stützbereich 41, der über einen ersten Bogenbereich 45 in den Außenführungsbereich 39 übergeht. Aus den vorangegangenen Erläuterungen wurde deutlich, dass der Außenführungsbereich 39 einen zweiten Stützbereich 43 aufweist, der bei dem dargestellten Ausführungsbeispiel sich unmittelbar beziehungsweise über einen zweiten Bogenbereich 47 an den Außenführungsbereich 39 anschließt. In diesem Fall stützen sich sowohl der erste Stützbereich 41 als auch der zweite Stützbereich 43 am Grundkörper 17 des Scharnierteils 9 ab. Denkbar ist es aber auch, dass der Außenführungsbereich 39 seinen zweiten Stützbereich unmittelbar im Verbindungsbereich 49 findet, sodass das Führungselement 37 quasi eine durchgehende Brücke zwischen dem ersten Stützbereich 41 nahe dem freien Ende 55 und dem Verbindungsbereich 49 bildet. In diesem Fall stützt sich der erste Stützbereich 41 am Grundkörper 17 des Scharnierteils 9 ab, während sich der zweite Stützbereich am Verbindungsbereich 49 abstützt. Aus den Erläuterungen wird deutlich, dass das Führungsteil 13 auch nur einen einzigen Außenführungsbereich, nämlich den Außenführungsbereich 39 aufweisen kann, und dass der Zusatzbereich 53 als Außenführungsbereich verzichtbar ist. Dabei kann der Außenführungsbereich 39 - wie hier dargestellt - eben, oder aber nach außen gewölbt ausgebildet sein.

Vorzugsweise ist aber, wie oben beschrieben, vorgesehen, dass der Außenführungsbereich 39 über Bogenbereiche 45 und 47 direkt in die ersten und zweiten Stützbereiche 41, 43 übergeht und dass zwischen dem zweiten Stützbereich 43 und dem Verbindungsbereich 49 noch ein Zusatzbereich 53 geschaffen werden kann, der ebenfalls der Außenführung des Führungsteils 13 dient. Die Stützbereiche des Zusatzbereichs 53 stützen sich am Grundkörper 17 des Scharnierteils 9 und am Verbindungsbereich 49 ab.

Die Seitenansicht gemäß Figur 3 zeigt noch einmal deutlich, dass das Führungselement 37 zwischen den beiden Stützbereichen 41 und 43 höher ausgebildet ist als in den sich nach rechts anschließenden Bereichen, die bis zum Verbindungsbereich 49 reichen. In den höheren Bereichen stützt sich das Führungsteil 13 sowohl an der oberen Führungsfläche 31 als auch an der unteren Führungsfläche 33 ab, die anhand von Figur 1 erläutert wurden.

Deutlich erkennbar ist auch noch einmal das vom Verbindungsbereich 49 ausgehende Verriegelungselement 25 mit der Verriegelungsnase 27, die sich vom Verbindungsbereich 49 nach links oben erstreckt und damit mit einer nach rechts weisenden Verriegelungsschulter 29 des Gehäuses zusammenwirken kann, was anhand von Figur 1 erläutert wurde.

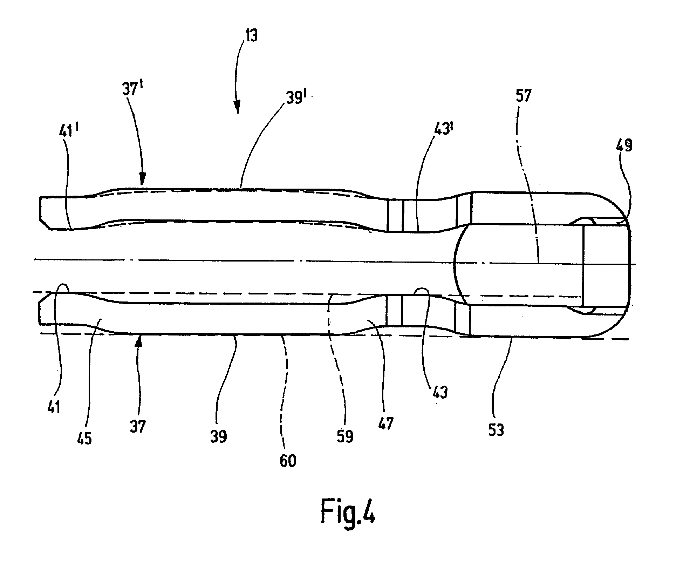

Figur 4 zeigt schließlich noch einmal das anhand der vorangegangenen Figuren erläuterte Führungsteil 13 in Draufsicht. Gleiche Teile sind wiederum mit gleichen Bezugsziffern versehen, sodass insofern auf die Beschreibung der vorhergehenden Figuren verwiesen wird.

Die Draufsicht zeigt noch einmal deutlich, dass ein bevorzugtes Ausführungsbeispiel des Führungsteils im Wesentlichen U-förmig ausgebildet ist, wobei zwei Schenkel durch Führungselemente 37 und 37' gebildet werden, die über einen Verbindungsbereich 49 miteinander federnd verbunden sind.

Die Führungselemente 37, 37' sind in sich ebenfalls federnd ausgebildet. Die folgenden Erläuterungen beziehen sich nur auf das untere Führungselement 37, weil das obere Führungselement 37' symmetrisch zu einer gedachten Mittelebene 57 angeordnet und spiegelbildlich ausgebildet ist. Die Mittelebene 57 fällt vorzugsweise mit der Mittelebene eines zwischen den Führungselementen 37, 37' angeordneten Scharnierteils 9 und mit einer Mittelebene eines Gehäuses 3 zusammen, in die das Scharnierteil 9 gemeinsam mit dem Federelement 13 eingebaut ist.

In Figur 4 wurde eine Hilfslinie 59 eingezeichnet, die der Seitenfläche eines zwischen die Führungselemente 37, 37' eingebrachten Scharnierteils 9 entspricht. Durch diese Hilfslinie 59 wird deutlich, dass der Außenführungsbereich 39 das Scharnierteil 9 nicht berührt, sondern quasi wie eine Brücke überspannt, die zwischen den Stützbereichen 41 und 43 liegt, wobei der Außenführungsbereich 39 über einen ersten Bogenbereich 45 in den ersten Stützbereich 41 und über einen zweiten Bogenbereich 47 in den zweiten Stützbereich 43 übergeht. Die Stützbereiche 41 und 43 liegen auf der Seitenfläche des Scharnierteils 9 auf, die in einer durch die Hilfslinie 59 und senkrecht zur Bildebene verlaufenden Ebene liegt. Von innen auf die Stützbereiche 41 und 43 wirkende Kräfte führen also zu einer elastischen Verformung der Bogenbereiche 45, 47, sodass beim Einstellen der Bügel einer Brille auf das Scharnierteil 9 wirkende Torsions-und Querkräfte federnd abgefangen werden können. Außerdem kann durch die federelastische Auslegung des Führungselements 37 ein Toleranzausgleich erreicht werden, ohne dass die Führungseigenschaften des Führungsteils 13 vermindert würden.

Insgesamt zeigt sich, dass das Führungsteil 13 quasi eine federnde Brücke bildet, die den Außenführungsbereich 39 darstellt. Durch die Hilfslinie 59 wird aber auch deutlich, dass das hier beschriebene Grundprinzip einer federelastischen Brücke auch im Zusatzbereich 53 zwischen dem zweiten Stützbereich 43 und dem Verbindungsbereich 49 realisiert wird: auch hier ergeben sich federnde Stützkräfte, die zu einer optimalen Führung eines Scharnierteils 9 führen.

Die Draufsicht in Figur 4 zeigt auch, dass die Federeigenschaften des Führungsteils 13 besonders gut sind, wenn zwei einander gegenüberliegende Führungselemente 37, 37' realisiert werden, wobei allerdings auch deutlich wird, dass das Scharnierteil 9 gegenüber dem ersten Führungselement 37 auch an der Innenseite der Ausnehmung 5 des Gehäuses 3 anliegen könnte und dass dabei durch Federeigenschaften des ersten Führungselements 37 schon verbesserte Führungseigenschaften des Führungsteils 13 erreicht werden. Besonders bevorzugt wird aber aufgrund der doppelten elastischen Führung das in Figur 4 und den vorangegangenen Figuren dargestellte symmetrische Führungsteil 13.

Auf der Außenseite des Führungsteils 3 ist durch eine Hilfslinie 60 die Innenseite eines Gehäuses 3 angedeutet, an der der Außenführungsbereich 39 und gegebenenfalls der Zusatzbereich 53 anliegen. Der Ausführungsbereich 39 und der Zusatzbereich 53 liegen an der Innenseite des Gehäuses 3 an, die in einer durch die Hilfslinie 60 und senkrecht zur Bildebene verlaufenden Ebene liegt.

Aus Figur 4 wird auch noch einmal deutlich, dass das Führungselement 37 zwischen zwei Ebenen liegt, die senkrecht auf der Bildebene von Figur 4 stehen: Die erste Ebene verläuft durch die Hilfslinie 59, die der Seitenfläche eines Scharnierteils 9 entspricht. Die zweite Ebene verläuft durch die Hilfslinie 60, mit der die Innenseite des Gehäuses 3 angedeutet ist. Das Führungselement 37 liegt an den beiden Ebenen vorzugsweise über seine gesamte Höhe an, sodass die von dem Federelement 37 aufzubringenden Stützkräfte bei einer Kipp- oder Drehbewegung des Scharnierteils 9 sich über eine große Fläche verteilen. Insbesondere durch den großen Außenführungsbereich 39 werden in das Scharnierteil 9 eingeleitete Kräfte federnd an die Gehäusewand weitergegeben. Damit werden Verformungen des Gehäuses mit hoher Sicherheit vermieden. Dies umso mehr, wenn zusätzlich noch durch den Zusatzbereich 53 Kräfte abgefangen und in die Gehäusewand eingeleitet werden können. Da das Führungselement 37 von dem Zusatzbereich 53 über einen Bogen in den Verbindungsbereich 49 übergeht, ist auch hier eine federnde Verbindung geschaffen. Der Zusatzbereich 53 bildet also eine federnde Zusatzbrücke zwischen dem zweiten Stützbereich 43 und dem bogenförmigen Übergang zum Verbindungsbereich 49. Kräfte des Scharnierteils 9 werden einerseits über den zweiten Stützbereich 43 und andererseits über die Innenfläche der Ausnehmung 51 im Verbindungsbereich 49 an den Zusatzbereich 53 federnd weitergegeben und in die Wand des Gehäuses 3 abgeleitet.

Die besonders guten Führungseigenschaften des Führungsteils 13 beruhen wesentlich darauf, dass das Führungselement 37 sandwichartig zwischen den beiden Ebenen durch die Hilfslinie 59 und die Hilfslinie 60 federnd eingespannt ist, und darauf, dass einerseits das Scharnierteil 9 sicher abgestützt wird und andererseits über das Scharnierteil 9 in das Führungselement 37 eingeleitete Kräfte über große Flächen, nämlich den Außenführungsbereich 39 und gegebenenfalls den Zusatzbereich 53, in die Gehäusewandung abgeleitet werden. Die flächige Abstützung des Führungselements 37 verhindert mit hoher Sicherheit eine Verformung des Gehäuses und damit ein Verdrehspiel.

Oben in Figur 4 ist beispielhaft nur anhand des Führungselements 37' durch gestrichelte Linien angedeutet, dass der Außenführungsbereich 39' nicht eben ausgebildet zu sein braucht, sondern zweischen den Stützbereichen 41' und 43' nach außen gewölbt sein kann. Es ist überdies möglich, den Außenführungsbereich zwischen dem ersten Stützbereich 41' und dem Verbindungsbereich 49 durchgehend auszubilden - also auf den zweiten Stützbereich 43' zu verzichten - und dabei eben oder aber nach außen gewölbt zu realisieren. Dies führt zu einer größeren Anlagefläche des Führungselements 37' an dem Gehäuse 3 und zu einer Verteilung der in das Führungselement 37' eingeleiteten Kräfte auf eine größere Fläche. Die Kraft pro Flächeneinheit der Gehäusewand wird somit reduziert.

Das Führungsteil 13 weist federelastisches Material zumindest im Bereich der Führungselemente 37, 37' auf. Die Fertigung ist besonders einfach, wenn das komplette Führungsteil 13 aus federelastischem Material besteht, vorzugsweise aus rostfreiem Federstahl, und aus einem bandförmigen Material im Wege eines Stanz-/Prägeverfahrens oder Biegeverfahrens hergestellt wird. Figur 3 zeigt, dass der Verbindungsbereich 49 auf der dem Verriegelungselement 25 gegenüberliegenden Unterseite einen Fortsatz 61 aufweist, über den das Führungsteil 13 während seiner Herstellung mit dem bandförmigen Material bis zum Schluss, also bis zur fertigen Ausgestaltung, verbunden war. Der Fortsatz 61 dient außerdem auch als Widerlager für die Verriegelungsnase 27, über das sich das Führungsteil 13 in eingebautem Zustand an der Unterseite der Ausnehmung 5 des Gehäuses 3 abstützt, hier also an der Oberseite des Bügels 7.

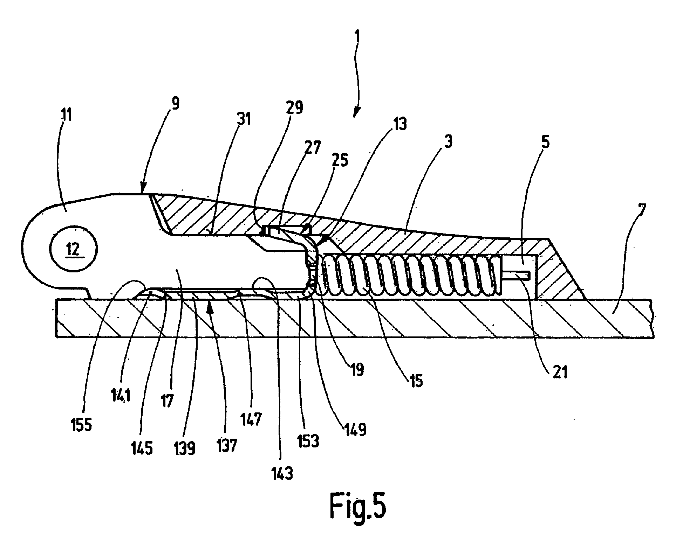

Figur 5 zeigt einen schematischen Querschnitt durch ein zweites Ausführungsbeispiel eines Federscharniers. Gleiche Teile sind mit gleichen Bezugsziffern versehen, so dass insofern auf die Beschreibung zu Figur 1 verwiesen wird.

Bei dem in Figur 5 dargestellten Ausführungsbeispiel weist das Führungsteil 13 ein Führungselement 137 auf, das zwischen der Unterseite des Scharnierteils 9 und der hier durch den Bügel 7 gebildeten - in Figur 1 als untere Führungsfläche 33 bezeichneten - Innenseite des Gehäuses 3 angeordnet ist. Dieses ist grundsätzlich gleich aufgebaut wie die Führungselemente 37 und 37', so dass insofern auf die Beschreibung hierzu verwiesen wird.

Das Führungselement 137 weist also einen ebenen oder nach außen gewölbten Außenführungsbereich 139 auf, der hier zwischen zwei Stützbereichen 141 und 143 liegt und in diese über einen ersten Bogenbereich 145 beziehungsweise zweiten Bogenbereich 147 übergeht. Auch hier kann ein Zusatzbereich 153 vorgesehen werden, der der Außenführung dient und sich am zweiten Stützbereich 143 und an einem Verbindungsbereich 149 abstützt.

In Figur 5 ist vorgesehen, dass der Außenführungsbereich 139 zwischen den beiden Stützbereichen 141 und 143 liegt. Es ist aber auch hier möglich, dass der Außenführungsbereich 139 dadurch gebildet wird, dass ein erster Stützbereich 141 am freien Ende 155 des Führungselements 135 vorgesehen ist, und dass der zweite Stützbereich durch den Verbindungsbereich 149 gebildet wird, über den das Führungselement 137 in die Verriegelungsnase 27 des Verriegelungselements 25 übergeht.

Das Führungselement 13 zeichnet sich hier also dadurch aus, dass das Scharnierteil 9 auf seiner Unterseite federnd abgestützt wird.

Das in Figur 5 dargestellte Ausführungsbeispiel des Führungsteils 13 kann dadurch abgewandelt werden, dass ein Führungselement zwischen der Oberseite des Scharnierteils 9 und der Innenfläche des Gehäuses 3 wirkt, hier dann also zwischen Scharnierteil 9 und der oberen Führungsfläche 31.

Denkbar ist es im Übrigen, das Führungsteil 13 so auszubilden, dass zwei - vorzugsweise praktisch gleich ausgebildete - Führungselemente vorgesehen werden, die das Scharnierteil 9 oben und unten stützen und führen.

Bei einer derartigen Ausgestaltung wären ähnliche Verhältnisse gegeben, wie sie anhand von Figur 4 erläutert wurden: Das Scharnierteil 9 wird dann aber oben und unten elastisch federnd abgestützt.

Bei dem in Figur 5 dargestellten Ausführungsbeispiel ist wiederum vorgesehen, dass das Gehäuse 3 auf einen Bügel 7 aufgebracht ist. Aber auch hier sei ausdrücklich darauf hingewiesen, dass das Gehäuse auch integraler Bestandteil eines etwas dickeren Bügels sein kann, in den dann die Ausnehmung 5 eingebracht wird. Im Übrigen kann das Gehäuse auch auf ein Mittelteil einer Brille aufgebracht werden oder Teil desselben sein.

Bei dem in Figur 5 dargestellten Ausführungsbeispiel ist noch vorgesehen, dass sich die Feder 15 unmittelbar am Widerlager 21 abstützt, dass also auf einen Zwischenring 23 verzichtet wird, wie er anhand von Figur 1 erläutert wurde.

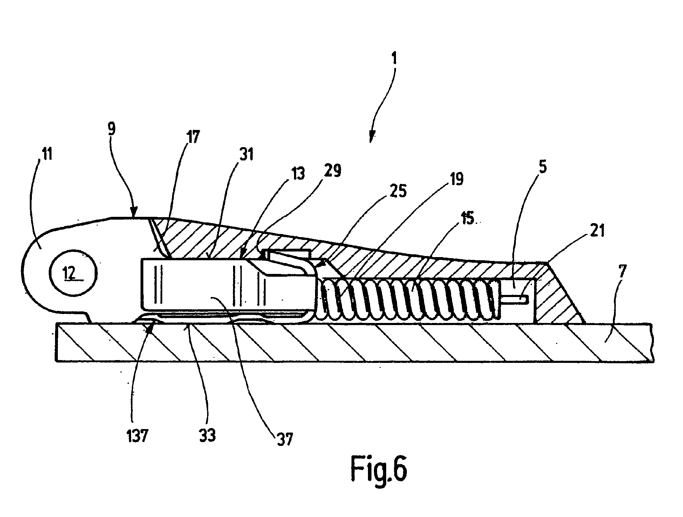

Figur 6 zeigt einen schematischen Querschnitt durch ein drittes Ausführungsbeispiel eines Federscharniers 1. Gleiche Teile wurden mit gleichen Bezugsziffern versehen, so dass insofern auf die Beschreibung der vorangegangenen Figuren verwiesen wird.

Bei dem in Figur 6 dargestellten Ausführungsbeispiel ist vorgesehen, dass das Führungsteil 13 ein Führungselement 137 aufweist, wie es anhand von Figur 5 erläutert wurde. Im Übrigen weist es mindestens ein Führungselement 37 auf, wie es anhand der Figuren 1 bis 4 im Einzelnen erläutert wurde. Besonders bevorzugt wird ein Ausführungsbeispiel, bei dem das Führungsteil 13 das Führungselement 137 und zwei symmetrisch zueinander angeordnete Führungselemente 37 und 37' aufweist.

Das Führungsteil 13 zeichnet sich dann also dadurch aus, dass es das Scharnierteil 9 einerseits auf beiden Seiten führt, andererseits aber auch auf seiner Unterseite, die hier dem Bügel 7 zugewandt ist, weil das Gehäuse 3 auf einen Bügel 7 aufgebracht und durch diesen verschlossen wird. Das Führungselement 137 kann also auch auf einer unteren Innenfläche des Gehäuses 3 abgestützt sein, insbesondere dann, wenn das Gehäuse 3 integraler Bestandteil eines Bügels 7 ist. Auch hier kann vorgesehen sein, dass das Gehäuse 3 auf ein Mittelteil einer Brille aufgebracht wird. Dann wird die Unterseite des Gehäuses durch das Mittelteil verschlossen, es sei denn das Gehäuse 3 wäre integraler Bestandteil eines Mittelteils.

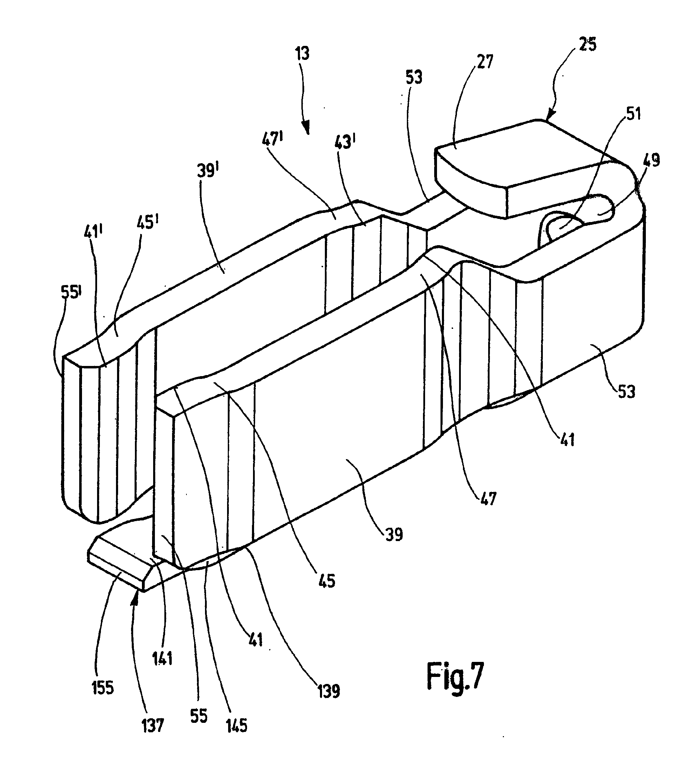

Figur 7 zeigt in perspektivischer Ansicht ein Führungsteil 13, wie es in Figur 6 dargestellt wurde.

Das Führungsteil 13 ist praktisch identisch aufgebaut wie das anhand von Figur 2 erläuterte. Es wird daher in vollem Umfang auf die Erläuterungen zu Figur 2 verwiesen. Es weist lediglich zusätzlich noch das Führungselement 137 auf, das der Unterstützung eines Scharnierteils 9 von unten dient.

Das in Figur 7 dargestellte Ausführungsbeispiel führt also insgesamt ein Scharnierteil 9 einerseits im Bereich seiner beiden Seitenflächen und andererseits im Bereich seiner Unterseite. Die Oberseite des Scharnierteils 9 kann dann mit einer oberen Führungsfläche 31 des Gehäuses 3 zusammenwirken.

Oben wurde bereits erläutert, dass das Führungsteil 13 aus einem ebenen Ausgangsmaterial in einem Stanz-, Prägeverfahren oder Biegeverfahren herstellbar ist, wobei bevorzugt rostfreier Federstahl Verwendung findet.

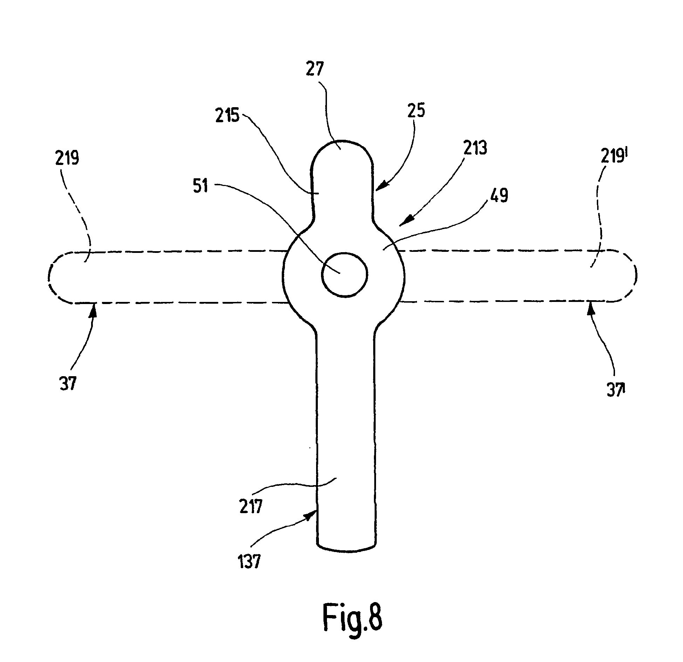

Figur 8 zeigt ein ebenes Element 213, aus dem ein Führungsteil 13 herstellbar ist. Das ebene Element 213 ist also aus einem Flachmaterial herausgestanzt und weist einen hier nach oben weisenden kurzen Materialstreifen 215 auf, aus dem ein Verriegelungselement 25 mit einer Verriegelungsnase 27 formbar ist. Der kurze Materialstreifen 215 setzt sich nach unten in einem längeren Materialstreifen 217 fort, aus dem durch entsprechende Formgebung ein Führungselement 137 herstellbar ist.

Zwischen dem kurzen Materialstreifen 215 und dem längeren Materialstreifen 217 findet sich ein Verbindungsbereich 49, der hier beispielhaft ringförmig ausgebildet ist und eine Ausnehmung 51 für den Fortsatz 19 eines Scharnierteils 9 aufweist.

Mit durchgezogenen Linien ist in Figur 8 also ein ebenes Element 213 dargestellt, aus dem ein Führungsteil 13 herstellbar ist, wie es anhand von Figur 5 erläutert wurde und das dazu dient, ein Scharnierteil 9 innerhalb eines Gehäuses 3 eines Federscharniers 1 mit Hilfe eines Führungselements 137 von unten elastisch federnd zu führen.

Mit gestrichelten Linien ist in Figur 8 angedeutet, dass das ebene Element 213 auch senkrecht zum kurzen Materialstreifen 215 verlaufende längere Materialstreifen 219 und/oder 219' aufweisen kann, die ebenfalls am Verbindungsbereich 49 ansetzen, der eine zentrale Ausnehmung 51 für einen Fortsatz 19 eines Scharnierteils 9 aufweist.

Aus einem ebenen Element 213 mit einem kurzen Materialstreifen 215 kann also ein Führungsteil 13 hergestellt werden, das ein Scharnierteil 9 auf einer Seite elastisch federnd führt. Es ist dann außer dem kurzen Materialstreifen 215 ein längerer Materialstreifen 219 oder 219' erforderlich.

Aus dem ebenen Element 213 kann aber auch ein Führungsteil 13 hergestellt werden, das ein Scharnierteil 9, wie anhand der Figuren 1 bis 4 erläutert, auf beiden Seiten führt und zwei Führungselemente 37 und 37', also auch zwei längere Materialstreifen 219 und 219' aufweist.

Schließlich ist es auch möglich, wie in Figur 8 dargestellt, ein ebenes Element 213 vorzusehen, das einen kurzen Materialstreifen 215, einen in Verlängerung dazu liegenden längeren Materialstreifen 217 aufweist sowie zwei senkrecht dazu angeordnete längere Materialstreifen 219 und 219', wobei die Materialstreifen alle von einem Verbindungsbereich 49 ausgehen, der eine Ausnehmung 51 umfasst.

Das ebene Element 213 kann aus einem ebenen Material ausgestanzt werden. Zur Herstellung eines Führungsteils 13, das mindestens ein Führungselement aufweist, wird dann ein Präge- oder Biegeverfahren eingesetzt, um den mindestens einen Außenführungsbereich zu realisieren, der mindestens einen Stützbereich aufweist, der an einem Scharnierteil 9 anliegt und dieses führt.

Alle oben beschriebenen Ausführungsformen des Führungsteils 13 können also aus einem ebenen Element 213 hergestellt werden.

Diese Herstellungsart ist sehr preiswert und, wie aus den Erläuterungen ersichtlich ist, sehr variabel, weil verschiedenste Führungsteile 13 realisierbar sind.

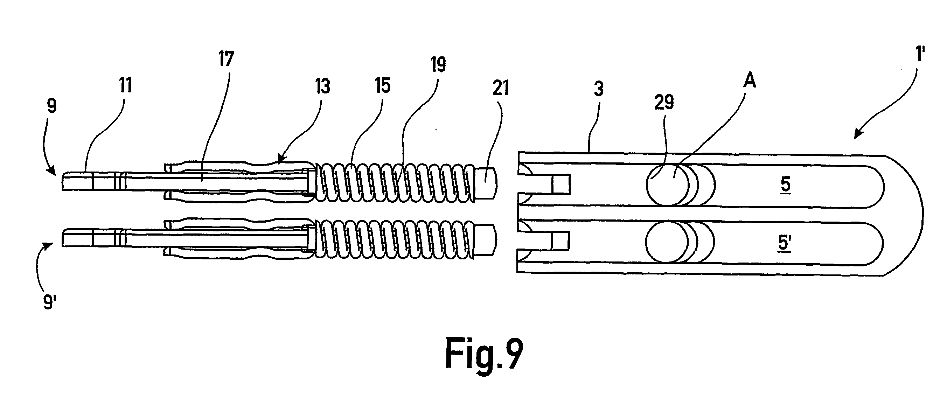

Figur 9 zeigt eine Explosionsdarstellung eines abgewandelten Ausführungsbeispiels eines Federscharniers 1' in Unteransicht. Gleiche Teile sind mit gleichen Bezugsziffern versehen, so dass insofern auf die Beschreibung zu den vorangegangenen Figuren verwiesen wird.

Das in Figur 9 dargestellte Federscharnier 1' zeichnet sich dadurch aus, dass das Gehäuse 3 zwei nebeneinander liegende Ausnehmungen 5, 5' aufweist, die identisch ausgebildet sind und jeweils der Aufnahme eines Scharnierteils 9, 9' dienen. Die Scharnierteile sind identisch ausgebildet und so aufgebaut, wie dies anhand der vorangegangenen Erläuterungen beschrieben wurde. Daher wird auf die Scharnierteile 9, 9' nur kurz eingegangen, wobei, wegen der Identität der Scharnierteile 9, 9' hier nur das obere Scharnierteil 9 erläutert wird.

Das Scharnierteil 9 ist so lang ausgebildet, dass nach Einbringung in die Ausnehmung 5 ein Bereich aus dem Gehäuse 3 herausragt, der das Scharnierauge 11 bildet. Es weist einen Grundkörper 17 auf, von dem ein hier nicht sichtbarer Fortsatz 19 ausgeht, an dem eine Feder 15 angebracht ist. Diese stützt sich einerseits am Grundkörper 17 des Scharnierteils 9 ab, andererseits an einem am Ende des Fortsatzes vorgesehenen oder ausgebildeten Widerlager 21. Der Abstand zwischen dem Anlagepunkt am Grundkörper und dem Widerlager 21 ist so gewählt, dass die Feder 15 unter Vorspannung am Scharnierteil gehalten wird.

Am Scharnierteil 9 ist das Führungsteil 13 angebracht, das gleichzeitig auch das Verschlussteil des Federscharniers 1 bilden und das Scharnierteil 9 im Gehäuse 3 halten kann. Das Führungsteil 13 weist, wie oben beschrieben, eine Verriegelungsnase auf, die hinter eine Verriegelungsschulter 29 greift. Diese wird, wie aus der Unteransicht ersichtlich, durch eine von unten in die obere Wandung des Gehäuses 3 eingebrachte Ausnehmung A realisiert. Dies wird aus den Schnittdarstellungen gemäß den Figuren 1, 5 und 6 besser ersichtlich.

Das Federscharnier nach Figur 9 zeichnet sich aber dadurch aus, dass zwei nebeneinander angeordnete Scharnierteile 9, 9' vorgesehen sind. Werden an den Scharnieraugen der Scharnierteile 9, 9' die entsprechenden Gegenlager eines Scharniers einer Brille angebracht, so ergibt sich ein besonders guter Halt am Federscharnier 1', weil die beiden nebeneinander liegenden Scharnierteile 9, 9' eine gute Verdrehsicherung darstellen. Das Federscharnier 1' gemäß Figur 9 eignet sich also besonders gut für Brillen mit breiten Bügeln.

Grundsätzlich ist es auch denkbar, zwei Federscharniere 1 der oben erläuterten Art nebeneinander auf einem Brillenbügel anzuordnen und dabei auch einen Abstand zwischen zwei Scharnierteilen zu ermöglichen, der größer ist als bei dem in Figur 9 dargestellten Ausführungsbeispiel des Federscharniers 1'-. Problematisch ist aber, dass dabei die beiden getrennten Federscharniere sehr exakt zueinander ausgerichtet sein müssen, um eine optimale Kopplung mit dem Gegenstück des zu realisierenden Scharniers zu gewährleisten.

Bei dem in Figur 9 dargestellten Ausführungsbeispiel des Federscharniers 1' ist zwischen den beiden Ausnehmungen 5, 5' ein relativ schmaler Steg vorgesehen. Es ist sehr wohl möglich, diesen zu verbreitern und damit die beiden Scharnierteile 9, 9' in einem größeren Abstand zu einander anzuordnen und damit eine noch bessere Verdrehsicherung zu gewährleisten..

Grundsätzlich ist es auch möglich, zwei getrennte Federscharniere, wie sie anhand der Figuren 1 bis 7 erläutert wurden, auf einer gemeinsamen Grundplatte zu fixieren und diese dann an einem Brillenbügel zu verankern. In diesem Fall kann bereits bei der Montage eine exakte Ausrichtung der beiden Einzel-Federscharniere gewährleistet werden, so dass ein mit diesen zusammenwirkendes Gegenstück eines Scharniers sich nicht verkantet.

Insgesamt zeigt sich also, dass die sehr guten Führungseigenschaften des Federscharniers 1, wie es anhand der Figuren 1 bis 7 erläutert wurde, sich auch auf abgewandelte Ausführungsbeispiele eines Federscharniers übertragen lassen, wobei, wie bei dem Ausführungsbeispiel nach Figur 9, auch noch zusätzliche Vorteile eintreten können, nämlich eine bessere Verdrehsicherung.

Aus den Erläuterungen zu den Figuren 1 bis 9 wird deutlich, dass das Führungsteil 13 sehr wohl auch dazu verwendet werden kann, anstelle herkömmlicher Verriegelungselemente im Gehäuse 3 von Federscharnieren 1 eingesetzt zu werden. Es ist also möglich, bestehende Formen von Gehäusen 3 bei der Montage eines Federscharniers 1 mit einem Führungsteil 13 auszustatten und damit die optimalen Führungseigenschaften zu realisieren.

Wird das Führungsteil 13 in einem Stanz-, Prägeverfahren oder Biegeverfahren aus einem federelastischen Material, vorzugsweise aus rostfreiem Federstahl, hergestellt, ergibt sich eine einfache und kostengünstige Herstellungsmethode, die angesichts der fertigungstechnisch möglichen Toleranzen ein optimales Führungsteil 13 ergeben.

## Patentansprüche

1. Federscharnier einer, Brille mit einem Gehäuse (3), mindestens einem Scharnierteil (9;9'), mindestens einer Feder (15) und mit mindestens einem Führungsteil (13), das eine Führungseinrichtung (35) aufweist, die sich einerseits an der Innenseite des Gehäuses (3) und andererseits am Scharnierteil (9;9') abstützt, wobei die Führungseinrichtung (35) mindestens ein Führungselement (37;37';137) aufweist,
das einen der Gehäuseinnenseite zugewandten Außenführungsbereich (39;39') umfasst, wobei das mindestens ein Führungselement (37;37';137) zwischen einer oder beiden Seitenwänden des Scharnierteils (9;9') und einer Innenseite des Gehäuses (3) und/oder zwischen der Unter- und/oder Oberseite des Scharnierteils (9;9') und einer Innenseite des Gehäuses (3) angeordnet ist, **dadurch gekennzeichnet, dass** dem Außenführungsbereich (39;39') zwei in einem Abstand zueinander angeordnete Stützbereiche (41 ,43; 41',43'; 141,143; ) zugeordnet sind, und dass der Außenführungsbereich federnd ausgebildet ist und das Scharnierteil (9;9') nicht berührt.

2. Federscharnier nach Anspruch 1, **dadurch gekennzeichnet, dass** die Führungseinrichtung (35) zwei symmetrisch zu einer Mittelebene (57) der Führungseinrichtung (35) ausgebildete Führungselemente (37;37') aufweist.

3. Federscharnier nach Anspruch 2, **dadurch gekennzeichnet, dass** die Führungselemente (37,37') zwischen zwei von dem Scharnierteil (9;9') und der Innenseite des Gehäuses (3) gebildeten Ebenen liegen.

4. Federscharnier nach Anspruch 2 oder 3, **dadurch gekennzeichnet, dass** die Mittelebene (57) der Führungseinrichtung (35) mit einer Mittelebene des Scharnierteils (9) und/oder des Gehäuses (3) zusammenfällt.

5. Federscharnier nach einem der vorhergehenden Ansprüche, **dadurch gekennzeichnet, dass** das Führungsteil (13) aus federelastischem Material, vorzugsweise aus rostfreiem Federstahl, besteht.

6. Federscharnier nach Anspruch 5, **dadurch gekennzeichnet, dass** das federelastische Material ein bandförmiges Material ist, aus dem das Führungsteil (13) im Stanz-/Prägeverfahren oder Biegeverfahren herstellbar ist.

7. Federscharnier nach einem der vorhergehenden Ansprüche, **dadurch gekennzeichnet, dass** die Führungseinrichtung (35) zwei symmetrisch zu einer Mittelebene (57) der Führungseinrichtung (35) ausgebildete Führungselemente (37; 37') aufweist und, dass das Führungsteil (13) im Wesentlichen U-förmig ist und dass die Schenkel durch die Führungselemente (37;37') gebildet werden.

8. Federscharnier nach Anspruch 7, **dadurch gekennzeichnet, dass** die Führungselemente (37;37') über einen Verbindungsbereich (49) ineinander übergehen.

9. Federscharnier nach Anspruch 8, **dadurch gekennzeichnet, dass** der Verbindungsbereich (49) eine Ausnehmung (51) aufweist, durch die ein von einem Grundkörper (17) des Scharnierteils (9;9') ausgehender Fortsatz (19) verläuft und sich vorzugsweise an der Innenfläche der Ausnehmung (51) abstützt.

10. Federscharnier nach Anspruch 9, **dadurch gekennzeichnet, dass** ein erster Stützbereich (41) des Außenführungsbereichs (39;39') sich an Grundkörper (17) des Scharnierteils (9;9') und ein zweiter Stützbereich (43) sich an Grundkörper (17) des Scharnierteils oder am Verbindungsbereich (49) abstützt.

11. Federscharnier nach Anspruch 9, **dadurch gekennzeichnet, dass** der Außenführungsbereich (39;39') einen Hauptbereich aufweist, dessen Stützbereiche (41,43;41',43') sich an Grundkörper (17) des Scharnierteils (9;9') abstützen, und einen Zusatzbereich (53), dessen Stützbereiche sich am Grundkörper (17) des Scharnierteils (9;9') und am Verbindungsbereich (49) abstützen.

12. Federscharnier nach Anspruch 11 , **dadurch gekennzeichnet, dass** die Stützbereiche (41,43;41',43') des Hauptbereichs Innenführungsbereiche für das Scharnierteil (9;9') bilden.

13. Federscharnier nach einem der vorhergehenden Ansprüche, **dadurch gekennzeichnet, dass** das Führungsteil (13) ein Verriegelungselement (25) aufweist.

14. Federscharnier nach Anspruch 12, **dadurch gekennzeichnet, dass** das Verriegelungselement (25) eine elastisch federnde Verriegelungsnase (27) aufweist, die mit dem Gehäuse (3) eine Schnappverriegelung ausbildet.

15. Federscharnier nach einem der vorhergehenden Ansprüche, **dadurch gekennzeichnet, dass** das Gehäuse (3) zwei nebeneinander liegenden Ausnehmungen (5;5') aufweist, in die je ein Scharnierteil (9;9') mit einer Feder (15) und einem Führungsteil (13) einbringbar sind.

## Claims

1. A spring hinge for a pair of glasses, comprising a housing (3), at least one hinge part (9; 9'), at least one spring (15) and at least one guide part (13), which encompasses a guide device (35), which rests on the inner side of the housing (3) on the one side and on the hinge part (9; 9') on the other side, wherein the guide device (35) encompasses at least one guide element (37; 37',137), which comprises an outer guide area (39; 39'), which faces the inner side of the housing, wherein the at least one guide element (37; 37';137) is arranged between one or both side walls of the hinge part (9; 9') and an inner side of the housing (3) and/or between the lower and/or upper side of the hinge part (9; 9') and an inner side of the housing (3), **characterized in that** two support areas (41, 43; 41', 43'; 141, 143), which are arranged at a distance from one another, are assigned to the outer guide area (39; 39'), and **in that** the outer guide area is embodied in an elastic manner and does not touch the hinge part (9; 9').

2. The spring hinge according to claim 1, **characterized in that** the guide device (35) encompasses two guide elements (37; 37'), which are embodied symmetrically to a center plane (57) of the guide device (35).

3. The spring hinge according to claim 2, **characterized in that** the guide elements (37, 37') are located between two planes, which are formed by the hinge part (9; 9') and the inner side of the housing (3).

4. The spring hinge according to claim 2 or 3, **characterized in that** the center plane (57) of the guide device (35) coincides with a center plane of the hinge part (9) and/or of the housing (3).

5. The spring hinge according to any one of the preceding claims, **characterized in that** the guide part (13) consists of spring-elastic material, preferably of stainless spring steel.

6. The spring hinge according to claim 5, **characterized in that** the spring-elastic material is a ribbon-shaped material, from which the guide part (13) can be produced in the punching/embossing process or bending process.

7. The spring hinge according to any one of the preceding claims, **characterized in that** the guide device (35) encompasses two guide elements (37; 37'), which are embodied symmetrically to a center plane (57) of the guide device (35), and **in that** the guide part (13) is substantially U-shaped and **in that** the journals are formed by the guide elements (37; 37').

8. The spring hinge according to claim 7, **characterized in that** the guide elements (37; 37') merge into one another via a connecting area (49).

9. The spring hinge according to claim 8, **characterized in that** the connecting area (49) encompasses a recess (51), through which an appendage (19), which starts at a base body (17) of the hinge part (9; 9'), runs and which is preferably supported on the inner surface of the recess (51).

10. The spring hinge according to claim 9, **characterized in that** a first support area (41) of the outer guide area (39; 39') is supported on the base body (17) of the hinge part (9; 9') and a second support area (43) is supported on the base body (17) of the hinge part or on the connecting area (49).

11. The spring hinge according to claim 9, **characterized in that** the outer guide area (39; 39') encompasses a main area, the support areas (41, 43; 41', 43') of which are supported on the base body (17) of the hinge part (9; 9'), and an additional area (53), the support areas of which are supported on the base body (17) of the hinge part (9; 9') and on the connecting area (49).

12. The spring hinge according to claim 11, **characterized in that** the support areas (41, 43; 41', 43') of the main area form inner guide areas for the hinge part (9; 9').

13. The spring hinge according to any one of the preceding claims, **characterized in that** the guide part (13) encompasses a locking element (25).

14. The spring hinge according to claim 12, **characterized in that** the locking element (25) encompasses an elastically resilient locking lug (27), which forms a snap- lock with the housing (3).

15. The spring hinge according to any one of the preceding claims, **characterized in that** the housing (3) encompasses two recesses (5; 5'), which are located next to one another, into each of which a hinge part (9; 9') comprising a spring (15) and a guide part (13) can be introduced.

## Revendications

1. Charnière à ressort de lunettes avec un logement (3), au moins une partie de charnière (9 ; 9'), au moins un ressort (15) et avec au moins une partie de guidage (13) qui présente un dispositif de guidage (35), qui s'appuie d'un côté sur le côté interne du logement (3) et de l'autre côté sur la partie de charnière (9 ; 9'), dans laquelle le dispositif de guidage (35) présente au moins un élément de guidage (37 ; 37' ; 137) qui comprend une région de guidage externe (39 ; 39') tournée vers le côté interne du logement, dans laquelle l'au moins un élément de guidage (37 ; 37' ; 137) est disposé entre une ou les deux parois latérales de la partie de charnière (9 ; 9') et un côté interne du logement (3) et/ou entre le côté inférieur et/ou supérieur de la partie de charnière (9 ; 9') et un côté interne du logement (3), **caractérisée en ce que** deux régions d'appui (41, 43 ; 41', 43' ; 141, 143) disposées à un écart l'une de l'autre sont associées à la région de guidage externe (39 ; 39'), et que la région de guidage externe est réalisée de manière élastique et ne touche pas la partie de charnière (9 ; 9').

2. Charnière à ressort selon la revendication 1, **caractérisée en ce que** le dispositif de guidage (35) présente deux éléments de guidage (37 ; 37') réalisés symétriquement à un plan central (57) du dispositif de guidage (35).

3. Charnière à ressort selon la revendication 2, **caractérisée en ce que** les éléments de guidage (37, 37') se situent entre deux plans formés par la partie de charnière (9 ; 9') et le côté interne du logement (3).

4. Charnière à ressort selon la revendication 2 ou 3, **caractérisée en ce que** le plan central (57) du dispositif de guidage (35) coïncide avec un plan central de la partie de charnière (9) et/ou du logement (3).

5. Charnière à ressort selon l'une quelconque des revendications précédentes, **caractérisée en ce que** la partie de guidage (13) se compose d'un matériau élastique comme un ressort, de préférence d'acier à ressorts inoxydable.

6. Charnière à ressort selon la revendication 5, **caractérisée en ce que** le matériau élastique comme un ressort est un matériau en forme de ruban à partir duquel la partie de guidage (13) peut être fabriquée dans le procédé d'estampage/matriçage ou le procédé de cintrage.

7. Charnière à ressort selon l'une quelconque des revendications précédentes, **caractérisée en ce que** le dispositif de guidage (35) présente deux éléments de guidage (37 ; 37') réalisés symétriquement à un plan central (57) du dispositif de guidage (35), et que la partie de guidage (13) est essentiellement en forme de U et que les branches sont formées par les éléments de guidage (37 ; 37').

8. Charnière à ressort selon la revendication 7, **caractérisée en ce que** les éléments de guidage (37 ; 37') se transforment l'un en l'autre par le biais d'une région de connexion (49).

9. Charnière à ressort selon la revendication 8, **caractérisée en ce que** la région de connexion (49) présente un évidement (51) à travers lequel un prolongement (19) partant d'un corps de base (17) de la partie de charnière (9 ; 9') s'étend et s'appuie de préférence sur la face interne de l'évidement (51).

10. Charnière à ressort selon la revendication 9, **caractérisée en ce qu'**une première région d'appui (41) de la région de guidage externe (39 ; 39') s'appuie sur le corps de base (17) de la partie de charnière (9 ; 9') et une seconde région d'appui (43) s'appuie sur le corps de base (17) de la partie de charnière ou sur la région de connexion (49).

11. Charnière à ressort selon la revendication 9, **caractérisée en ce que** la région de guidage externe (39 ; 39') présente une région principale dont les régions d'appui (41, 43 ; 41', 43') s'appuient sur le corps de base (17) de la partie de charnière (9 ; 9'), et une région supplémentaire (53) dont les régions d'appui s'appuient sur le corps de base (17) de la partie de charnière (9 ; 9') et sur la région de connexion (49).

12. Charnière à ressort selon la revendication 11, **caractérisée en ce que** les régions d'appui (41, 43 ; 41', 43') de la région principale forment des régions de guidage interne pour la partie de charnière (9 ; 9').

13. Charnière à ressort selon l'une quelconque des revendications précédentes, **caractérisée en ce que** la partie de guidage (13) présente un élément de verrouillage (25).

14. Charnière à ressort selon la revendication 12, **caractérisée en ce que** l'élément de verrouillage (25) présente un nez de verrouillage élastique (27) qui réalise avec le logement (3) un verrouillage à déclic.

15. Charnière à ressort selon l'une quelconque des revendications précédentes, **caractérisée en ce que** le logement (3) présente deux évidements juxtaposés (5 ; 5') dans lesquels une partie de charnière (9 ; 9') peut à chaque fois être introduite avec un ressort (15) et une partie de guidage (13).
